# EUROPEAN PATENT APPLICATION

(11) **EP 4 711 662 A1**
(43) Date of publication of application: **18.03.2026**
(21) Application number: 23937381.4
(22) Date of filing: 12.05.2023
(51) Int. Cl.: F17C 3/00

(54) **CRYOGENIC TANK**

(71) Applicant: IHI Aerospace Co., Ltd., Gunma 370-2398 (JP)
(72) Inventor: YOSHIDA, Kouki, Tomioka-shi, Gunma 370-2398 (JP); SHIGENARI, Yu, Tomioka-shi, Gunma 370-2398 (JP); SATO, Hiroyuki, Tomioka-shi, Gunma 370-2398 (JP)
(74) Representative: Epping - Hermann - Fischer
(86) International application number: PCT/JP2023/017902
(87) International publication number: WO 2024/236634

(57) **Abstract**

Provided is a cryogenic tank having improved reliability as compared with a cryogenic tank of related art. The cryogenic tank includes an outer shell made of a fiber-reinforced composite material, and multiple inner layers disposed on an inner side of the outer shell. The multiple inner layers include respective liners made of resins, and respective release members made of resins and disposed at outer surfaces of the respective liners.

## Description

### Technical Field

The present disclosure relates to a cryogenic tank for storing a cryogenic fluid.

### Background Art

A cryogenic tank for storing a cryogenic fluid is often used in an aerospace field. For example, a rocket equipped with an engine whose fuel is liquid hydrogen is mounted with tanks for storing respective ones of the liquid hydrogen and liquid oxygen that is an oxidizing agent. As part of global warming countermeasures, hydrogen-powered aircrafts that do not emit carbon dioxide have been developed, and each of such hydrogen-powered aircrafts also requires a tank for storing liquid hydrogen.

The cryogenic tank for the aerospace use as described above is highly demanded to be light in weight as well as demonstrating the basic function to store a cryogenic fluid. Therefore, a tank that adopts as a material a fiber-reinforced composite material instead of a known metal has been proposed (for example, see Patent Document 1).

Such a tank made of a fiber-reinforced composite material includes a structure in which a liner made of metal or resin is bonded to an inner surface of an outer shell made of a fiber-reinforced composite material. In this structure, the outer shell made of the fiber-reinforced composite material functions as a structural member, and the liner made of the metal or resin functions as a liquid-tight member to prevent the cryogenic fluid stored in the tank from leaking. The liner is also desired to be light in weight and is highly demanded to employ a liner made of resin with specific gravity smaller than that of metal.

However, in the tank with such a structure, a coefficient of linear expansion of the fiber-reinforced composite material included in the outer shell is significantly lower than a coefficient of linear expansion of the resin included in the liner. Therefore, when the tank falls into a cryogenic state by the inside of the tank being filled with the cryogenic fluid, the outer shell that contracts relatively less may limit shrinkage of the liner with the relatively high coefficient of linear expansion. As a result, tensile stress may act on the liner, and the liner may get damaged and separated from the inner surface of the outer shell.

A method considered to solve such a problem includes, instead of bonding an outer shell made of a fiber-reinforced composite material and a liner made of resin to one another, disposing a film-shaped or tape-shaped release member made of resin between the outer shell and the liner, more specifically, at an inner surface of the outer shell or an outer surface of the liner.

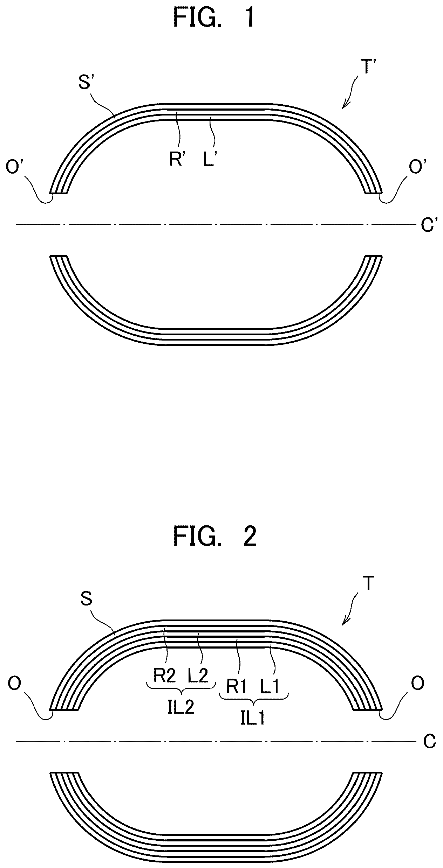

FIG. 1 is a schematic explanatory diagram illustrating a structure of a cryogenic tank that adopts the above-described method, and illustrates an end surface taken along a plane passing through an axial center C'.

A cryogenic tank T' is a hollow body of revolution having an opening O' at each of end portions of the hollow body of revolution in a direction of the axial center C'. The cryogenic tank T' includes a structure in which an outer shell S' is disposed on an outermost side and a liner L' is disposed on an innermost side, and a release member R' is disposed between the outer shell S' and the liner L'. Here, a shape of an inner surface of the outer shell S' is substantially the same as a shape of an outer surface of the release member R', and a shape of an inner surface of the release member R' is substantially the same as a shape of an outer surface of the liner L'. The openings O' are provided to attach a tank cap, a pipe, or the like.

The outer shell S' is a member that functions as a structural member of the cryogenic tank T' and is made of a fiber-reinforced composite material.

The liner L' is a member that functions as a liquid-tight member to prevent the cryogenic fluid stored in the cryogenic tank T' from leaking, and is made of a resin.

The release member R' is a member bonded to either the inner surface of the outer shell S' and the outer surface of the liner L' to prevent adhesion between the outer shell S' and the liner L', and is made of a resin.

As described above, in the tank T' with the structure in which the outer shell S' made of the fiber-reinforced composite material, the release member R' made of the resin, and the liner L' made of the resin are disposed in order from the outside in this manner, when the tank T' falls into a cryogenic state by the inside of the tank T' being filled with the cryogenic fluid, action of the release member R' allows the outer shell S' and the liner L' to shrink at their respective coefficients of linear expansion while the outer shell S' and the liner L' are separate from each other. Therefore, the liner L' is unlikely to get damaged and can sufficiently demonstrate the function as the liquid-tight member that prevents the cryogenic fluid stored in the tank T' from leaking.

### Related Art Document

### Patent Document

Patent Document 1: Japanese Unexamined Patent Application Publication No. 2006-62320

### Summary of the Invention

### Problems to be solved by the Invention

However, in the tank T' with the structure illustrated in FIG. 1, when a crack is generated in the liner L' , liquid tightness may be lost immediately and the cryogenic fluid stored inside may leak outside. Accordingly, the conventional cryogenic tank T' has room for improvement from a reliability perspective.

The present disclosure is made in view of the problem as described above, and an object thereof is to provide a cryogenic tank having improved reliability as compared with a cryogenic tank of the related art.

### Means for solving the Problems

In order to solve the above-described problem, a cryogenic tank of the present disclosure includes an outer shell made of a fiber-reinforced composite material, and multiple inner layers disposed on an inner side of the outer shell. The multiple inner layers include respective liners made of resins, and respective release members made of resins and disposed at outer surfaces of the respective liners.

### Advantageous Effects of the Invention

The cryogenic tank of the present disclosure has redundancy to generation of a crack in the liner, and has reliability higher than that of a cryogenic tank of the related art.

### Brief Description of the Drawings

FIG. 1 is a schematic explanatory diagram illustrating a structure of a cryogenic tank of the related art.
FIG. 2 is a schematic explanatory diagram illustrating a structure of a cryogenic tank of an embodiment of the present disclosure.

### Mode for carrying out the Invention

Hereinafter, an embodiment of the present disclosure is described in detail with reference to the drawings.

FIG. 2 is a schematic explanatory diagram illustrating a structure of a cryogenic tank T of an embodiment of the present disclosure, and illustrates an end surface taken along a plane passing through an axial center C. Note that the cryogenic tank T is used to store a cryogenic fluid. Examples of the cryogenic fluid include liquid hydrogen (temperature: -253°C), liquid nitrogen (temperature: -196°C), liquid oxygen (temperature: -183°C), and LNG (temperature: -162°C).

A structure of the cryogenic tank T of the embodiment of the present disclosure is similar to the structure of the cryogenic tank T' of the related art described with reference to FIG. 1. However, the structure of the cryogenic tank T of the embodiment of the present disclosure is different from the structure of the cryogenic tank T' of the related art in that the cryogenic tank T' of the related art includes only one layer including the release member R' and the liner L' on the inner side of the outer shell S', whereas the cryogenic tank T of the embodiment of the present disclosure includes multiple layers (inner layers) each including a release member R and a liner L on an inner side of an outer shell S.

As illustrated in FIG. 2, the cryogenic tank T of the embodiment of the present disclosure is a hollow body of revolution having an opening O at each of end portions of the hollow body of revolution in a direction of the axial center C. The cryogenic tank T includes, in order from the outside, the outer shell S and at least two inner layers IL each including the release member R and the liner L. The openings O are provided to attach a tank cap, a pipe, or the like. Note that although in the illustrated example the openings O provided at respective end portions have the same diameter, the openings O may have different diameters, or the opening O may be provided only at one end portion.

In the illustrated example, the two inner layers IL, that is, a first inner layer IL1 and a second inner layer IL2 are provided in order from the inside on the inner side of the outer shell S. Note that the number of inner layers provided on the inner side of the outer shell S is appropriately selectable in accordance with a degree of reliability required for the cryogenic tank T, and three or more inner layers can be provided.

The first inner layer IL1 includes a first liner L1 and a first release member R1 disposed on an outer side of the first liner L1. Moreover, the second inner layer IL2 includes a second liner L2 disposed on an outer side of the first inner layer IL1 (first release member R1) and a second release member R2 disposed on an outer side of the second liner L2.

A shape of an inner surface of the outer shell S is substantially the same as a shape of an outer surface of the second release member R2. A shape of an inner surface of the second release member R2 is substantially the same as a shape of an outer surface of the second liner L2. A shape of an inner surface of the second liner L2 is substantially the same as a shape of an outer surface of the first release member R1. A shape of an inner surface of the first release member R1 is substantially the same as a shape of an outer surface of the first liner L1.

The outer shell S is a member that functions as a structural member of the cryogenic tank T, and is made of a fiber-reinforced composite material. Examples of such a fiber-reinforced composite material can include fiber-reinforced plastic (FRP), such as carbon fiber-reinforced plastic (CFRP), glass fiber-reinforced plastic, and aramid fiber-reinforced plastic. As a matrix resin for the fiber-reinforced composite material, a matrix resin having a molding temperature lower than melting start temperatures of resins (described later) included in the respective ones of the first liner L1 and the second liner L2 is used. Alternatively, the same one as one of the resins included in the respective ones of the first liner L1 and the second liner L2 having a lower melting start temperature (when three or more inner layers are provided, one of resins included in liners of the respective inner layers having the lowest melting start temperature) may be used. Alternatively, when the first liner L1 and the second liner L2 are made of the same resin, the same one as the resin included in the first liner L1 and the second liner L2 may be used.

The first liner L1 and the second liner L2 are members that function as a liquid-tight member to prevent the cryogenic fluid stored in the cryogenic tank T from leaking, and are made of a thermoplastic resin. As such a resin, a resin having corrosion resistance to the cryogenic fluid stored in the tank T and liquid tightness within a temperature range from room temperature to cryogenic temperature is used. Examples of such a resin include polycarbonate (PC), polyetheretherketone (PEEK), and liquid crystal polymer (LCP).

The first release member R1 and the second release member R2 are members bonded to outer surfaces of the first liner L1 and the second liner L2, respectively, in order to prevent adhesion between the second liner L2 and the first liner L1 and between the outer shell S and the second liner L2, respectively, and are made of a thermoplastic resin. As such a resin, a resin with a melting start temperature higher than both a melting start temperature of the matrix resin for the fiber-reinforced composite material included in the outer shell S as described above and melting start temperatures of the resins included in the respective ones of the first liner L1 and the second liner L2 is used. Examples of such a resin include Teflon (registered trademark), polyimide, and polyetheretherketone (PEEK) in accordance with a combination with the thermoplastic resins used for the first liner L1 and the second liner L2.

As described above, the cryogenic tank T of the embodiment of the present disclosure includes the structure in which the outer shell S, the second inner layer IL2 including the second release member R2 and the second liner L2, and the first inner layer IL1 including the first release member R1 and the first liner L1 are disposed in order from the outside. Therefore, even if a crack is generated in the innermost first liner L1, the second liner L2 can take over the function as the liquid-tight member to prevent the cryogenic fluid stored in the cryogenic tank T from leaking. Therefore, generation of a crack in the first liner L1 does not immediately lead to loss of liquid tightness, and thereby to leaking of the cryogenic fluid stored inside to the outside.

Note that thicknesses of the release members and the liners included in the corresponding inner layers are appropriately selectable in accordance with characteristics, such as strength required for the release members and the liners, and a restriction on weight of the cryogenic tank T.

As such, the cryogenic tank T of the embodiment of the present disclosure has redundancy to generation of a crack in the liner, and thus has reliability higher than that of the cryogenic tank T' of the related art described with reference to FIG. 1.

Note that the cryogenic tank T of the embodiment of the present disclosure can be manufactured by, first, the first liner L1 being molded, then, the first release member R1, the second liner L2, and the second release member R2 being disposed sequentially on the outer side of the first liner L1, and then, the outer shell S being disposed on the outer side of the second release member R2.

In this case, the fiber-reinforced composite material included in the outer shell S disposed at last is molded at a temperature lower than the melting start temperatures of the resins included in the respective ones of the first liner L1 and the second liner L2. Therefore, the molding of the fiber-reinforced composite material does not have an adverse effect such as deformation on the first liner L1 and the second liner L2 that have been molded or disposed. Further, the melting start temperatures of the resins included in the respective ones the first release member R1 and the second release member R2 are higher than the melting start temperatures of the resins included in the respective ones of the first liner L1 and the second liner L2. Therefore, performing the heat treatment described above allows each of the two release members to demonstrate a release action.

When the matrix resin for the fiber-reinforced composite material included in the outer shell S is the same as one of the resins included in the respective ones of the first liner L1 and the second liner L2 having a lower melting start temperature (when three or more inner layers are provided, one of resins included in liners of the respective inner layers having the lowest melting start temperature), or when the matrix resin for the fiber-reinforced composite material included in the outer shell S is the same as the resins included in the respective ones of the first liner L1 and the second liner L2, by the molding temperature of the fiber-reinforced composite material included in the outer shell S disposed at last being an appropriate temperature equal to or higher than the melting start temperature of the matrix resin for the fiber-reinforced composite material, the fiber-reinforced composite material is moldable without losing liquid tightness of the first liner L1 and the second liner L2 that have been molded or disposed. Also in this case, the melting start temperatures of the resins included in the respective ones of the first release member R1 and the second release member R2 are higher than the melting start temperatures of the resins included in the respective ones of the first liner L1 and the second liner L2. Therefore, performing the heat treatment described above allows each of the two release members to demonstrate a release action.

### (Aspects of the Present Disclosure)

A cryogenic tank of a first aspect of the present disclosure includes: an outer shell made of a fiber-reinforced composite material; and multiple inner layers disposed on an inner side of the outer shell, wherein the multiple inner layers include: respective liners made of resins; and respective release members made of resins and disposed at outer surfaces of the respective liners.

In the cryogenic tank of a second aspect of the present disclosure, the resins included in the respective liners are resins each having corrosion resistance to the cryogenic fluid and liquid tightness within a temperature range from room temperature to cryogenic temperature, and the resins included in the respective release members are resins each having a melting start temperature higher than both a melting start temperature of a matrix resin for the fiber-reinforced composite material included in the outer shell and melting start temperatures of the resins included in the respective liners.

In the cryogenic tank of a third aspect of the present disclosure, the matrix resin for the fiber-reinforced composite material included in the outer shell is same as the resins included in the respective liners, or the matrix resin for the fiber-reinforced composite material included in the outer shell is same as a resin having a lowest melting start temperature among the resins included in the respective liners.

### Explanation of Reference Signs

IL, IL1, IL2 inner layer
L, L1, L2 liner
R, R1, R2 release member
S outer shell
T cryogenic tank

## Claims

1. A cryogenic tank for storing a cryogenic fluid, comprising:
an outer shell made of a fiber-reinforced composite material; and
multiple inner layers disposed on an inner side of the outer shell, wherein
the multiple inner layers include:
respective liners made of resins; and
respective release members made of resins and disposed at outer surfaces of the respective liners.

2. The cryogenic tank according to claim 1, wherein the resins included in the respective liners are resins each having corrosion resistance to the cryogenic fluid and liquid tightness within a temperature range from room temperature to cryogenic temperature, and
the resins included in the respective release members are resins each having a melting start temperature higher than both a melting start temperature of a matrix resin for the fiber-reinforced composite material included in the outer shell and melting start temperatures of the resins included in the respective liners.

3. The cryogenic tank according to claim 2, wherein the matrix resin for the fiber-reinforced composite material included in the outer shell is same as the resins included in the respective liners, or
the matrix resin for the fiber-reinforced composite material included in the outer shell is same as a resin having a lowest melting start temperature among the resins included in the respective liners.
